Europäisches Patentamt

European Patent Office

Office européen des brevets

(11) Publication number: 0 146 173
A1

# EUROPEAN PATENT APPLICATION

(21) Application number: 84201755.0

(22) Date of filing: 29.11.84

(51) Int. Cl.⁴: **A 22 B 5/08**

(30) Priority: 02.12.83 NL 8304150

(43) Date of publication of application: 26.06.85 Bulletin 85/26

(84) Designated Contracting States: AT BE CH DE FR GB IT LI LU NL SE

(71) Applicant: MACHINEFABRIEK G.J. NIJHUIS B.V., Parallelweg 4 Postbus 102, NL-7100 AC Winterswijk (NL)

(72) Inventor: Nijhuis, Gerrit Jan, Rusthuisstraat 10, NL-7101 JH Winterswijk (NL)

(74) Representative: van der Beek, George Frans et al, Nederlandsch Octrooibureau Johan de Wittlaan 15 P.O. Box 29720, NL-2502 LS 's-Gravenhage (NL)

(54) Mechanical unhairing machine for the carcass of a slaughtered animal.

(57) Unhairing machine for unhairing slaughtered pigs said machine having a longitudinally extending shaft (3) with scrapers (4) which operate through the slots between bars (13, 14) of a supporting grid said machine being of the type with longitudinal passage of the pig through the machine which passage and unhairing are improved by the provision of a plate (1) which covers at least part of the grid (6) and restricts freedom of movement of the carcass away from the grid.

- 1 -

Mechanical unhairing machine for the carcass of a slaughtered animal.

The invention relates to an unhairing machine for unhairing the carcass of a slaughtered animal, particularly a pig, which consists of a grid of parallel bars extending in planes lying transversely to the longitudinal axis of the machine to form a bed carrying the carcass, and also of a drivable shaft extending parallel to the longitudinal direction of the machine and provided with arms carrying beating means or scrapers in as many planes extending transversely to the longitudinal axis as there are openings between the grid bars, said beating means or scrapers extending above the bars of the grid and through the bars in order to be able to process a carcass lying thereon, the machine further being provided with a holding-up means situated outside the operating circle of the beating means or scrapers, in a position situated opposite the beating direction of the beating means or scrapers.

A machine of this kind is known from DOS 31 39 337. In this known machine the carcasses to be treated are deposited on the bed of the machine with their longitudinal axis parallel to the longitudinal axis of the machine, in a transverse direction relative to said longitudinal axis, with the aid of suitable transport means, said bed having upwardly extending grid bars. These upwardly extending grid bars can be swung aside, so that on termination of the treatment the carcass can be conveyed further in a transverse direction relative to the longitudinal axis of the machine and then conveyed out of the machine.

At the point where the head of the carcass which is to be treated should be situated, this known machine is provided with a holding-up means. This holding-up means can be knocked away through the action of the beating means, and in addition it has dimensions which are smaller than the trunk of the carcass.    In this way it is intended to achieve better unhairing of the head part.    This obviously has no effect on the remainder of the carcass.

The invention seeks to provide a machine in which the unhairing of the carcass can be improved as a whole and the speed of passage can be increased.

According to the invention this aim can be achieved in that the machine, viewed in the longitudinal direction, has an inlet and an outlet, in such a manner that passage through it can be effected parallel to the longitudinal axis, and that the holding-up means consists of a plate which, viewed in the direction of passage, covers at least a part of the grid bars and has a bottom longitudinal edge which adjoins the operating circles of the beating means or scrapers and from the bottom edge extends upwards along a path which is curved in cross-section, thus restricting the freedom of movement of the carcasses away from the grid.    According to the invention a plate-shaped holding-up means is thus used which extends over a part of the length of the grid.    In view of the fact that the carcass travels through the machine in the longitudinal direction and not in the transverse direction, every part of the carcass will move through the zone where the holding-up plate is situated.    This plate presses the part of the carcass which is to be processed closer onto the beating means and the unhairing is therefore improved.    With the arrangement according to the invention the carcass is thus subjected to the action of the holding-up means over the entire length, so that better and at the same time quicker unhairing can be achieved.    In addition, the legs of the carcass are prevented from being caught between the grid bars.

The plate is preferably situated at the inlet part, so that a carcass newly arriving from a scalding tank can be immediately subjected to the action of the

holding-up plate.

Unhairing machines through which carcasses travel in the longitudinal direction are known per se, and they have beating means which, viewed in the longitudinal direction, are disposed in succession on the shaft in such a manner as to have a pitch whereby a force component in the direction of passage is at the same time imparted to the carcasses treated by the beating means, so that conveying in the longitudinal direction is achieved. In these known machines with passage in the longitudinal direction the carcasses are often fed via a chute which, because of its slope, supplies a force component in the conveying or passage direction, whereby at the location of the plate according to the invention the pitch of the successive beating means can be smaller than in places where no plate is provided, and can even be zero. The residence time in the plate section can thus be lengthened, while in the remaining section it can be shortened.

The plate may extend over the entire length of the grid, provided that the beating means produce a force component in the direction of passage or this is achieved in some other way. One suitable possible method consists in that the entire machine is constructed with a downward slope, so that the carcasses move in the direction of passage from the inlet to the outlet through the action of their own weight. The beating means can then again have a smaller pitch or zero pitch. If use is made of a plate which occupies only a part of the length of the grid, for example one third of the length, and if this plate is not placed at the inlet but further on in the machine, then at the location of the plate a smaller pitch or zero pitch of the beating means can once again be adopted, with a greater pitch upstream and downstream of the plate, viewed in the direction of passage.

With the invention it is thus possible to produce a machine which, because of the plate, has an

- 4 -

intensive unhairing zone determined by the plate and able to extend over a part or the whole of the length of the machine, as well as a part or arrangements which ensure longitudinal conveying.

In addition, the plate ensures that a succeeding carcass sliding into the machine will easily expel the preceding carcass.

The invention will now be further explained with reference to the drawings.

Figure 1 shows diagrammatically in perspective and partly cut away a part of an unhairing machine in accordance with the invention.

Figure 2 is a view of the inlet side of the machine shown in Figure 1.

Figure 3 shows diagrammatically the pitch pattern of the beating means in relation to the plate in one possible embodiment.

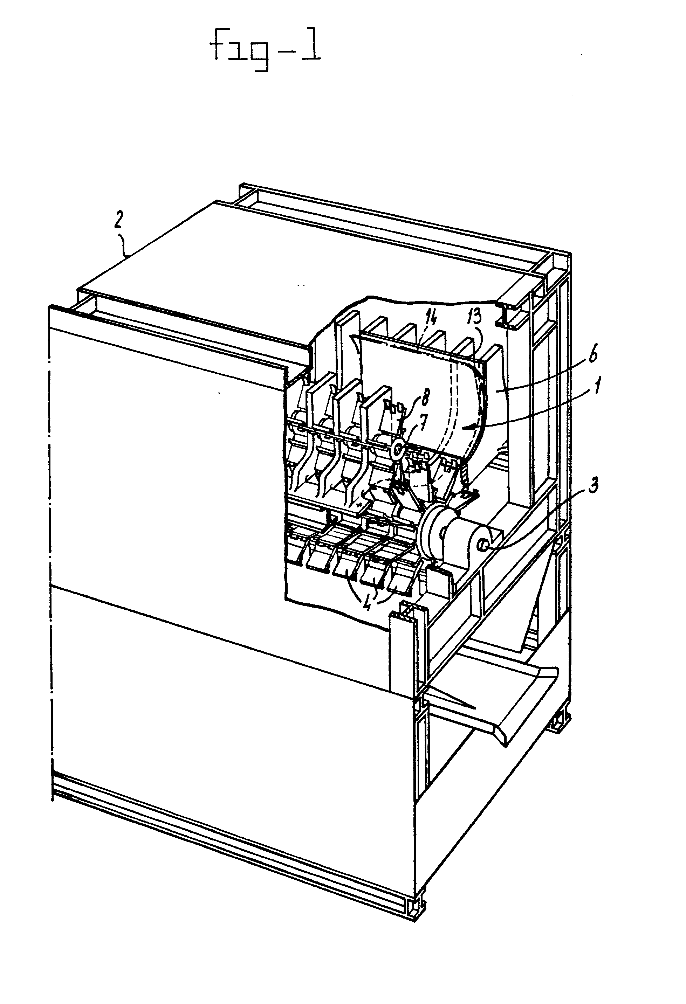

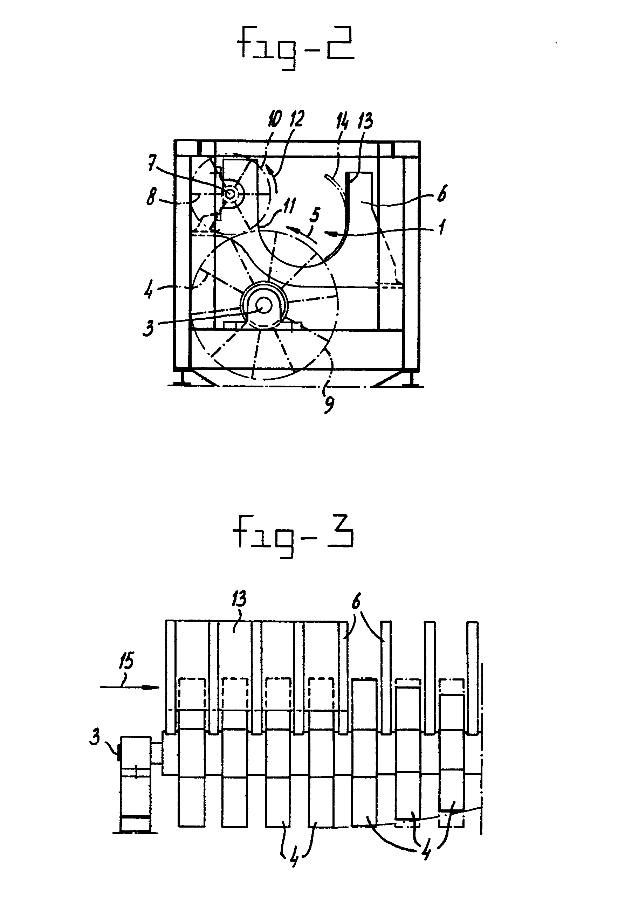

The machine shown in Figures 1 and 2 has an inlet side 1 and an outlet to the left thereof at the site of the end wall 2. In the machine a main shaft 3 is mounted which carries sets of beating means 4 in successive planes lying transversely to the shaft 3. Rotation occurs in the direction of the arrow 5 (Figure 2).

The machine is in addition provided with a bed of curved grid bars 6, which are disposed in successive transverse planes parallel to one another and spaced apart in such a manner that the beating means 4 move through and above them, as can be seen most clearly in Figure 2.

In addition, a second shaft or auxiliary shaft 7 equipped with beating means 8 is also provided, these beating means likewise rotating in the openings between the grid bars 6 and projecting inwards with their operating circle outside the inner surfaces of the grid bars.

Figure 2 shows the operating circles 9 and 10 respectively of the respective beating means 4 and 8, and it can be seen how these means project inwards
out of the inner surface 11 of the grid bars.

A carcass entering this machine will be rotated
and lifted up through the action of the rotating beating means, so that the beating means or scrapers will
always act on new surfaces of the skin, which has been
prepared in a scalding tank, and will pull out the
hairs.    The beating means 8 act in the direction
shown by the arrow 12, which is the same as that of
the beating means 4.

According to the invention a part of the grid
bars which adjoins the operating circle 9 of the bottom beating means is now covered by a plate 13, which
may lie entirely against the grid bars but, as indi-
cated by the broken line 14, may also be curved further inwards.    This plate 13 or 14 limits the free-
dom of movement of a carcass which, viewed in Figure
2, is to be moved upwards by the beating means 4 and
pushed to the right by the beating means 8.    More intensive unhairing is thereby achieved.    The carcass
moves over its entire length through the zone where
the plate 13, 14 is situated, and is thus more intensively treated over the whole length.

Figures 1 and 2 show the plate on the inlet
side.

This plate may extend over the entire length or
may start some distance from the inlet and, if desired end some distance from the outlet.

A longer residence time is desirable in the
zone where the plate is situated, and thus the already
intensive treatment is further intensified.    As shown
in Figure 1, this can be achieved by giving the beating means 4 a zero pitch or a far smaller pitch than
beyond the plate.

Figure 3 shows diagrammatically how the beating
means 4 lying opposite the plate 13 are disposed with
zero pitch, while the following beating means 4' have
a normal pitch known per se.

- 6 -

The sets of beating means are mounted on a shaft and can thus easily be adjusted to the desired pitch.

On examination of Figure 3 it will immediately be clear that the plate 13 may also be disposed in the centre, and that the beating means upstream of the plate 13 and downstream of the plate 13, viewed in the direction of passage indicated by the arrow 15, can have a greater pitch than that of the beating means 4 situated in the region of the plate 13.

The speed of passage can in addition be influenced by giving the machine as a whole a downward slope from the inlet 1 to the outlet; this is of particular importance when the plate 13 extends over the major part or the whole of the length of the grid formed by the grid bars 6. A machine of this kind can be constructed with a considerably shorter length than known machines, but can nevertheless effect more intensive unhairing.

CLAIMS

1. Unhairing machine for unhairing the carcass of a slaughtered animal, particularly a pig, which consists of a grid of parallel bars extending in planes lying transversely to the longitudinal axis of the machine to form a bed carrying the carcass, and also of a drivable shaft extending parallel to the longitudinal direction of the machine and provided with arms carrying beating means or scrapers in as many planes extending transversely to the longitudinal axis as there are openings between the grid bars, said beating means or scrapers extending above the bars of the grid and through the bars in order to be able to process a carcass lying thereon, the machine further being provided with a holding-up means situated outside the operating circle of the beating means or scrapers, in a position situated opposite the beating direction of the beating means or scrapers, characterised in that the machine, viewed in the longitudinal direction, has an inlet and an outlet, in such a manner that passage through it can be effected parallel to the longitudinal axis, and that the holding-up means consists of a plate which, viewed in the direction of passage, covers at least a part of the grid bars and has a bottom longitudinal edge which adjoins the operating circles of the beating means or scrapers and from the bottom edge extends upwards along a path which is curved in cross-section, thus restricting the freedom of movement of the carcasses away from the grid.

2. Machine according to Claim 1, characterised in that, viewed in the direction of passage, the plate begins at the first grid bars.

3. Machine according to Claim 1 or 2, characterised in that the plate extends over one third of the length of the bed formed by the grid bars.

4. Machine according to Claim 1 or 2, characterised in that the plate extends over the entire length of the bed formed by the grid bars.

5. Machine according to Claim 1, 2 or 3, wherein the beating means or scrapers succeeding one another in the longitudinal direction are fastened on the shaft in such a manner that they extend along a helical line, characterised in that the beating means or scrapers situated opposite the plate have a smaller pitch than the beating means or scrapers situated outside the operative range of the plate.

6. Machine according to Claim 5, characterised in that the beating means or scrapers situated opposite the plate extend along a straight line parallel to the shaft, that is to say with zero pitch.

7. Machine according to one or more of the preceding claims, characterised in that the plane of the grid and the axis of the shaft of the beating means or scrapers form an angle with the horizontal, in such a manner that the machine slopes downwards from the inlet to the outlet.

fig-1

0146173

# fig-2

# fig-3

0146173

European Patent Office

**EUROPEAN SEARCH REPORT**

. Application number

EP 84 20 1755

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | DE-A-3 139 337 (G. ABELE)<br><br>* Figure 1; pages 4-11 * | 1 | A 22 B 5/08 |
| A | | 6 | |
| | --- | | |
| Y | DE-C- 395 670 (CINCINNATI BUTCHERS SUPPLEY COMPANY)<br><br>* Figures 1-4; page 2, line 48 - page 3, line 57 * | 1 | |
| A | | 2,4 | |
| | ----- | | |

<br>

| TECHNICAL FIELDS SEARCHED (Int. Cl.4) |
|---|
| A 22 B |

The present search report has been drawn up for all claims

| Place of search | Date of completion of the search | Examiner |
|---|---|---|
| THE HAGUE | 13-03-1985 | VILBIG K. |